# EUROPÄISCHE PATENTSCHRIFT

(11) **EP 3 611 018 B1**
(45) Veröffentlichungstag und Bekanntmachung des Hinweises auf die Patenterteilung: **03.03.2021**
(21) Anmeldenummer: 19190007.5
(22) Anmeldetag: 05.08.2019
(51) Int. Cl.: B32B 21/04, B44C 5/04, E04F 11/104, E04F 11/16, E04F 11/108

(54) **TRITTSTUFE UND TREPPE MIT TRITTSTUFEN**
STEP AND STAIRCASE WITH STEPS
MARCHEPIED ET ESCALIER POURVU DE MARCHEPIEDS

(30) Priorität: 17.08.2018 DE 202018003793 U
(43) Veröffentlichungstag der Anmeldung: 19.02.2020
(73) Patentinhaber: Blue Star GmbH, 74076 Heilbronn (DE)
(72) Erfinder:
(74) Vertreter: Clemens, Gerhard

(56) Entgegenhaltungen:
- EP-A1- 1 548 204
- EP-A2- 1 145 869
- EP-A2- 1 217 143
- DE-A1- 3 241 685
- DE-A1- 10 361 207

## Beschreibung

### TECHNISCHES GEBIET

Die vorliegende Erfindung betrifft eine Trittstufe für eine Treppe mit einem tragenden Stufenkern, einer Oberseite, die eine Trittfläche bildet, einer Unterseite, einer Stirnvorderseite, einer Stirnrückseite, wobei der tragende Stufenkern aus Massivholzmaterial besteht, auf der Oberseite an dem Stufenkern eine obere Deckplattenschicht angebracht ist, auf der Unterseite an dem Stufenkern eine untere Deckplattenschicht angebracht ist, die obere und untere Deckplattenschicht aus schwind- und quellfreiem Material bestehen, zumindest auf der oberen Deckplattenschicht eine Laminatbeschichtung aus High-Pressure-Laminate aufgebracht ist.

Die vorliegende Erfindung betrifft weiterhin eine Treppe mit derartigen Trittstufen.

### STAND DER TECHNIK

Es ist bekannt, für Treppen Massivholzstufen einzusetzen, die eine Dicke von 40 mm aufweisen.

Aus der deutschen Patentschrift DE-A-32 41 685 ist eine Treppenstufe bekannt, bei der ein plattenförmiger Kern aus Holzwerkstoff ausgebildet ist, der auf seiner der Trittfläche zugewandten Seite eine hochverdichtete Schicht aufweist. Der Kern ist allseitig mit Furnieren umgeben. Die besondere Ausgestaltung, die sich in der langjährigen Praxis als besonders zuverlässig bewährt hat, bezieht sich auf die obere Vorderkante der Treppenstufe. In diesem Bereich wird eine Holzleiste eingesetzt, die eine erhöhte Festigkeit aufweist und im Zusammenspiel mit den anschließenden Furnieren eine runde Kantenausbildung gewährleistet.

Aus der EP 1 217 143 B1 ist eine Trittstufe für Treppen der eingangs genannten Art bekannt, bei der der Stufenkern durch zwei hochverdichtete miteinander verleimte Holzspannplatten gebildet wird. Dabei ist zumindest die obere vordere Kante des Stufenkerns gerundet ausgebildet. Der Stufenkern ist von einer Laminatbeschichtung aus Continous-Pressed-Laminate (CPL) auf der Oberseite und um die vordere Oberkante herum auf der Vorderseite vorhanden. Die Laminatbeschichtung weist dabei eine Dekorschicht und mit harzgetränkte Papierschichten auf. Des Weiteren ist eine transparente Verschleißfolie vorhanden.

In der DE 103 61 207 A1 ist eine Platte für Treppenstufen beschrieben, die die Merkmale des Oberbegriffs des Anspruchs 1 aufweist. Die in diesem Dokument beschriebene Platte für Treppenstufen weist einen Holzträger mit einem symmetrischen mindestens 3-schichtigen Aufbau auf, wobei eine Mittelschicht des Holzträgers miteinander verleimte Holzstäbchen aufweist. Der Holzträger ist mit HPL (High Pressure Laminat) - Schichtpressstoff durch Verklebung beidseitig und durch Postforming an den zwei Längskanten beschichtet.

### DARSTELLUNG DER ERFINDUNG

Ausgehend von dem genannten Stand der Technik liegt der vorliegenden Erfindung die Aufgabe beziehungsweise das technische Problem zugrunde eine laminatbeschichtete Trittstufe mit postgeformter Oberkante bereit zu stellen, die die Vorteile der Laminatbeschichtung beibehält, eine hohe Tragfähigkeit besitzt, eine hohe Biegesteifigkeit aufweist, wirtschaftlich hergestellt werden kann und eine Alternative zu den üblichen 40 mm dicken Massivholzstufen bildet.

Die erfindungsgemäße Trittstufe ist durch die Merkmale des unabhängigen Anspruchs 1 gegeben. Vorteilhafte Ausgestaltungen und Weiterbildungen sind Gegenstand der von dem unabhängigen Anspruch 1 direkt oder indirekt abhängigen Ansprüche.

Die erfindungsgemäße Trittstufe zeichnet sich demgemäß dadurch aus, dass folgende Merkmale in Kombination zusammenwirken:
- An der Stirnvorderseite an dem Stufenkern eine vordere Deckstirnschicht, auch Anleimeinheit genannt, angebracht ist,
- die obere äußere Kante der vorderen Deckstirnschicht als postgeformte gerundete Kante mit einem Rundungsradius ausgebildet ist,
- stirnseitig auf der vorderen Deckstirnschicht eine Laminatbeschichtung aus High-Pressure-Laminate (HPL) oder Continuous-Pressure-Laminate (CPL) aufgebracht ist.

Die erfindungsgemäße Trittstufe gewährleistet eine hohe Tragfähigkeit mit hoher Biegefestigkeit. Durch den speziellen mehrschichtigen Aufbau werden die notwendigen technischen Eigenschaften erreicht und gleichzeitig die Vorteile der Laminatbeschichtung der Trittstufen wie beispielsweise UV-Lichtbeständigkeit, Abriebfestigkeit, Rutschhemmung und Trittsicherheit beibehalten. Durch die gerundete Vorderkante ist ein dauerhafter Kantenschutz gegeben, da es zu keinen Ablösungen kommen kann.

Der Stufenkern kann bevorzugt als Vollholzplatte oder als Tischlerplatte ausgebildet sind.

Eine besonders bevorzugte Ausgestaltung zeichnet sich dadurch aus, dass die obere und untere Deckplattenschicht und die vordere Deckstirnschicht als, insbesondere hochverdichtete, Holzwerkstoffplatten ausgebildet sind. Weiterhin zeichnet sich eine vorteilhafte Ausgestaltung dadurch aus, dass die obere und untere Deckplattenschicht und die vordere Deckstirnschicht als Holzspanplatten, HDF- oder MDF-Platten ausgebildet sind.

Um eine hohe Traglast und Biegesteifigkeit zu gewährleisten, zeichnet sich eine vorteilhafte Ausgestaltung dadurch aus, dass die Dicke der Trittstufe im Bereich zwischen 35 bis 45 mm, insbesondere 38 bis 42 mm, liegt, wobei bevorzugt die Dicke der oberen und unteren Deckplattenschicht und der vorderen Deckstirnschicht im Bereich zwischen circa 3 bis 6 mm liegt.

Um eine dauerhaft zuverlässige Funktionalität und lange Standzeiten zu gewährleisten, zeichnet sich eine besonders vorteilhafte Ausgestaltung dadurch aus, dass die obere und untere Deckplattenschicht und die vordere Deckstirnschicht mit dem Stufenkern verleimt oder verklebt sind.

Eine besonders vorteilhafte Weiterbildung zeichnet sich dadurch aus, dass die untere äußere Kante der vorderen Deckstirnschicht als postgeformte Kante mit einem Rundungsradius ausgebildet ist.

Unter Sicherheitsaspekten zeichnet sich eine bevorzugte Ausgestaltung dadurch aus, dass der Rundungsradius der oberen und/oder unteren äußeren Kante im Bereich zwischen 2 bis 10 mm, insbesondere bei circa 5 mm, liegt.

Die Laminatbeschichtung kann nicht nur auf der Oberseite und Vorderseite, sondern die Trittstufe vollständig umgebend vorhanden sein.

Um hohe Standfestigkeiten zu gewährleisten und die Trittsicherheit zu erhöhen, zeichnet sich eine vorteilhafte Ausgestaltung dadurch aus, dass die Laminatbeschichtung zumindest auf der Oberseite der Trittstufe abriebfeste und rutschhemmende Eigenschaften aufweist.

Die Laminatbeschichtung kann mehrere kunstharzgetränkte Papierschichten, eine Dekorschicht und außenseitig eine Lackschicht aufweisen, wobei die Lackschicht hohe Abriebfestigkeiten aufweist, UV-beständig ist und durch weitere Maßnahmen rutschhemmende Eigenschaften aufweist.

Die erfindungsgemäße Treppe mit Trittstufen ist dadurch gekennzeichnet, dass die Treppe Trittstufen mit den oben beschriebenen schichtweisen Aufbau aufweist.

Weitere Ausführungsformen und Vorteile der Erfindung ergeben sich durch die in den Ansprüchen ferner aufgeführten Merkmale sowie durch die nachstehend angegebenen Ausführungsbeispiele.

### KURZE BESCHREIBUNG DER ZEICHNUNG

Die Erfindung sowie vorteilhafte Ausführungsformen und Weiterbildungen derselben werden im Folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1: schematische Perspektivdarstellung einer mehrschichtigen Trittstufe mit gerundeten Vorderkanten und CPL-Laminatbeschichtung und
- Fig. 2: schematischer Querschnitt durch die Trittstufe gemäß Fig. 1 entlang Schnittführung I-I.

### WEGE ZUM AUSFÜHREN DER ERFINDUNG

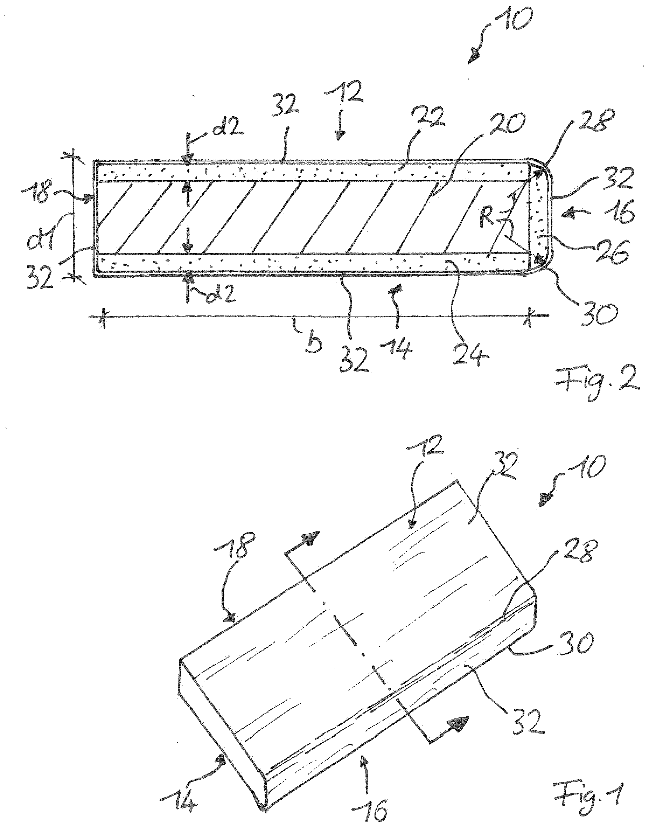

Die Fig. 1 zeigt eine Trittstufe 10 mit einer rechteckförmigen Umfangskontur, einer Oberseite 12, eine Unterseite 14, einer Stirnvorderseite 16 und einer Stirnrückseite 18. Die Treppenstufe 10 ist von einer Laminatbeschichtung 32 umgeben, die unter Druck und Temperatur verleimt wird. Die Treppenstufe 10 weist einen Schichtaufbau auf, der in Fig. 2 im Querschnitt näher dargestellt wird.

Die Trittstufe 10 besteht aus einem tragenden Stufenkern 20, der im Ausführungsbeispiel aus Vollholzmaterial besteht. Oberseitig ist auf den Stufenkern 20 eine obere Deckplattenschicht 22 aufgeleimt. Die obere Deckplattenschicht 22 weist die Breite b des Stufenkerns 20 auf. Unterseitig ist auf den Stufenkern 20 eine untere Deckplattenschicht 24 aufgeleimt, die ebenfalls die Breite b des Stufenkerns 20 aufweist. Auf der Stirnvorderseite 16 ist über die gesamte Dicke d1 der Trittstufe 10 verlaufend eine vordere Deckstirnschicht 26 angeleimt, die auch als Anleimeinheit bezeichnet wird. Die vordere Deckstirnschicht 26 besitzt eine obere äußere Kante 28 und eine untere äußere Kante 30, die gerundet mit einem Rundungsradius R ausgebildet sind.

Die Trittstufe 10 ist von einer Laminatbeschichtung 32 umgeben, die im CPL-Verfahren aufgebracht beziehungsweise oberflächenmäßig verleimt ist. Dabei wird die Laminatbeschichtung 32 unter Druck und Temperatur angebracht.

Die Dicke d1 der Trittstufe 10 liegt im Bereich zwischen 38 bis 42 mm und beträgt im dargestellten Ausführungsbeispiel circa 39 mm. Die Dicke d2 der oberen und unteren Deckplattenschicht 22, 24 liegt im Bereich von 3 bis 6 mm und beträgt im Ausführungsbeispiel 4 mm.

Sowohl die obere und untere Deckplattenschicht 22, 24 als auch die vordere Deckstirnschicht 26 sind im Ausführungsbeispiel als Holzspannplatten ausgebildet. Es ist auch möglich, diese Schichten als MDF-Platten auszubilden. Der Rundungsradius der oberen äußeren Kante 28 und der unteren äußeren Kante 30 liegt im Bereich zwischen 3 und 10 mm und beträgt im dargestellten Ausführungsbeispiel 5 mm.

Die gerundete Kante 28 beziehungsweise 30 wird postgeformt, das heißt diese wird bevor die Laminatbeschichtung 32 aufgebracht wird, entsprechend gefräst und anschließend wird die Laminatbeschichtung 32 im CPL-Verfahren aufgebracht.

Die erfindungsgemäße Trittstufe 10 gewährleistet eine hohe Tragfähigkeit und Biegesteifigkeit. Gleichzeitig ist eine wirtschaftliche Herstellung möglich. Die mit der CPL-Laminatbeschichtung erzielbaren Vorteile hinsichtlich UV-Lichtbeständigkeit, Abriebfestigkeit, Rutschhemmung usw. werden gewährleistet.

Mit der erfindungsgemäßen Trittstufe 10 steht somit eine qualitativ hochwertige, kostengünstige Alternative zu den üblichen 40 mm dicken Massivholzstufen zur Verfügung, die in einer Vielzahl von Fällen für Treppen eingesetzt werden. Die gerundete postgeformte obere äußere Kante 30 erhöht die Begehsicherheit zusätzlich. Dadurch, dass für die obere Deckplattenschicht 22 die untere Deckplattenschicht 24 und die vordere Deckstirnschicht 26 Span- oder MDF-Material eingesetzt wird, das heißt "totes" Material, wird ein eventuelles späteres Reißen der Laminatbeschichtung 32 durch Quellen und/oder Schwinden des Stufenkerns 20 zuverlässig vermieden, was hohe Standfestigkeiten und eine dauerhaft zuverlässige Funktion gewährleistet.

## Patentansprüche

1. Trittstufe (10) für eine Treppe mit
- einem tragenden Stufenkern (20),
- einer Oberseite (12), die eine Trittfläche bildet,
- einer Unterseite (14),
- einer Stirnvorderseite (16),
- einer Stirnrückseite (18), wobei
- der tragende Stufenkern (20) aus Massivholzmaterial besteht,
- auf der Oberseite (12) an dem Stufenkern (20) eine obere Deckplattenschicht (22) angebracht ist,
- auf der Unterseite (14) an dem Stufenkern (20) eine untere Deckplattenschicht (24) angebracht ist,
- die obere und untere Deckplattenschicht (22, 24) aus schwind- und quellfreiem Material bestehen,
- zumindest auf der oberen Deckplattenschicht (22) eine Laminatbeschichtung aus High-Pressure-Laminate (HPL) aufgebracht ist,
- **dadurch gekennzeichnet, dass**
- an der Stirnvorderseite (16) an dem Stufenkern (20) eine vordere Deckstirnschicht (26), auch Anleimeinheit genannt, angebracht ist die aus schwind- und quellfreiem Material besteht,
- die obere äußere Kante (28) der vorderen Deckstirnschicht (26) als postgeformte gerundete Kante (28) mit einem Rundungsradius (R) ausgebildet ist,
- stirnseitig auf der vorderen Deckstirnschicht (26) eine Laminatbeschichtung aus High-Pressure-Laminate (HPL) oder Continuous-Pressure-Laminate (CPL) aufgebracht ist.

2. Trittstufe nach Anspruch 1,
- **dadurch gekennzeichnet, dass**
- der Stufenkern (20) aus Vollholzplatte ausgebildet ist.

3. Trittstufe nach Anspruch 1,
- **dadurch gekennzeichnet, dass**
- der Stufenkern (20) als Tischlerplatte ausgebildet ist.

4. Trittstufe nach einem oder mehreren der Ansprüche 1 bis 3,
- **dadurch gekennzeichnet, dass**
- die obere und untere Deckplattenschicht (22, 24) und die vordere Deckstirnschicht (26) als, insbesondere hochverdichtete, Holzwerkstoffplatten ausgebildet sind.

5. Trittstufe nach einem oder mehreren der Ansprüche 1 bis 3,
- **dadurch gekennzeichnet, dass**
- die obere und untere Deckplattenschicht (22, 24) und die vordere Deckstirnschicht (26) als Holzspanplatten, HDF- oder MDF-Platten ausgebildet sind.

6. Trittstufe nach einem oder mehreren der vorstehenden Ansprüche,
- **dadurch gekennzeichnet, dass**
- die Dicke (d1) der Trittstufe (10) im Bereich zwischen 35 bis 45 mm (Millimeter), insbesondere 38 bis 42 mm (Millimeter), liegt.

7. Trittstufe nach einem oder mehreren der vorstehenden Ansprüche,
- **dadurch gekennzeichnet, dass**
- die Dicke (d2) der oberen und unteren Deckplattenschicht (22, 24) und der vorderen Deckstirnschicht (26) im Bereich zwischen circa 3 bis 6 mm (Millimeter) liegt.

8. Trittstufe nach einem oder mehreren der vorstehenden Ansprüche,
- **dadurch gekennzeichnet, dass**
- die obere und untere Deckplattenschicht (22,24) und die vordere Deckstirnschicht (26) mit dem Stufenkern (20) verleimt oder verklebt sind.

9. Trittstufe nach einem oder mehreren der vorstehenden Ansprüche,
- **dadurch gekennzeichnet, dass**
- die untere äußere Kante (30) der vorderen Deckstirnschicht (26) als postgeformte Kante mit einem Rundungsradius (R) ausgebildet ist.

10. Trittstufe nach einem oder mehreren der vorstehenden Ansprüche,
- **dadurch gekennzeichnet, dass**
- der Rundungsradius (R) der oberen und/oder unteren äußeren Kante (28, 30) im Bereich zwischen 2 bis 10 mm (Millimeter), insbesondere bei circa 5 mm (Millimeter), liegt.

11. Trittstufe nach einem oder mehreren der vorstehenden Ansprüche,
- **dadurch gekennzeichnet, dass**
- die Laminatbeschichtung (32) die Trittstufe (10) vollständig umgibt.

12. Trittstufe nach einem oder mehreren der vorstehenden Ansprüche,
- **dadurch gekennzeichnet, dass**
- die Laminatbeschichtung (32) zumindest auf der Oberseite der Trittstufe (10) abriebfeste und rutschhemmende Eigenschaften aufweist.

13. Trittstufe nach einem oder mehreren der vorstehenden Ansprüche,
- **dadurch gekennzeichnet, dass**
- die Laminatbeschichtung (32) mehrere kunstharzgetränkte Papierschichten, eine Dekorschicht und außenseitig eine Lackschicht aufweist.

14. Treppe mit Trittstufen,
- **dadurch gekennzeichnet, dass**
- die Treppe Trittstufen (10) nach einem oder mehreren der Ansprüche 1 bis 13 aufweist.

## Claims

1. Step (10) for a staircase, having
- a load-supporting step core (20),
- an upper side (12), which forms a tread surface,
- an underside (14),
- a front end side (16),
- a rear end side (18), wherein
- the load-supporting step core (20) consists of solid wood material,
- an upper cover board layer (22) is applied to the step core (20) on the upper side (12),
- a lower cover board layer (24) is applied to the step core (20) on the underside (14),
- the upper and lower cover board layer (22, 24) consist of shrinkage- and swell-free material,
- a laminate coating consisting of high-pressure laminate (HPL) is applied at least to the upper cover board layer (22),
**characterized in that**
- a front end cover layer (26), also termed gluing-on unit, which consists of shrinkage- and swell-free material, is applied to the step core (20) on the front end side (16),
- the upper outer edge (28) of the front end cover layer (26) takes the form of a post-formed rounded edge (28) having a rounding radius (R),
- a laminate coating consisting of high-pressure laminate (HPL) or continuous-pressure laminate (CPL) is applied to the front side of the front end cover layer (26).

2. Step according to Claim 1,
- **characterized in that**
- the step core (20) is formed from solid wood board.

3. Step according to Claim 1,
- **characterized in that**
- the step core (20) is formed as blockboard.

4. Step according to one or more of Claims 1 to 3,
- **characterized in that**
- the upper and lower cover board layer (22, 24) and the front end cover layer (26) are formed as, in particular highly compressed, wood-based material boards.

5. Step according to one or more of Claims 1 to 3,
- **characterized in that**
- the upper and lower cover board layer (22, 24) and the front end cover layer (26) are formed as wood-chip boards, HDF or MDF boards.

6. Step according to one or more of the preceding claims,
- **characterized in that**
- the thickness (d1) of the step (10) lies in the range between 35 to 45 mm (millimetre), in particular 38 to 42 mm (millimetre).

7. Step according to one or more of the preceding claims,
- **characterized in that**
- the thickness (d2) of the upper and lower cover board layer (22, 24) and of the front end cover layer (26) lies in the range between approximately 3 to 6 mm (millimetre).

8. Step according to one or more of the preceding claims,
- **characterized in that**
- the upper and lower cover board layer (22, 24) and the front end cover layer (26) are glued or adhesively bonded to the step core (20).

9. Step according to one or more of the preceding claims,
- **characterized in that**
- the lower outer edge (30) of the front end cover layer (26) takes the form of a post-formed edge having a rounding radius (R).

10. Step according to one or more of the preceding claims,
- **characterized in that**
- the rounding radius (R) of the upper and/or lower outer edge (28, 30) lies in the range between 2 to 10 mm (millimetre), in particular approximately 5 mm (millimetre).

11. Step according to one or more of the preceding claims,
- **characterized in that**
- the laminate coating (32) completely surrounds the step (10).

12. Step according to one or more of the preceding claims,
- **characterized in that**
- the laminate coating (32) has, at least on the upper side of the step (10), abrasion-resistant and anti-slip properties.

13. Step according to one or more of the preceding claims,
- **characterized in that**
- the laminate coating (32) has a plurality of synthetic resin-impregnated paper layers, a decor layer and, on the outside, a coating layer.

14. Staircase having steps,
- **characterized in that**
- the staircase has steps (10) according to one or more of Claims 1 to 13.

## Revendications

1. Marche (10) pour un escalier, munie
- d'un noyau de marche porteur (20),
- d'un côté supérieur (12), qui forme une surface de marche,
- d'un côté inférieur (14),
- d'un côté frontal avant (16),
- d'un côté frontal arrière (18), dans laquelle
- le noyau de marche porteur (20) est constitué d'un matériau à base de bois massif,
- une couche de panneau de recouvrement supérieure (22) est disposée sur le côté supérieur (12) sur le noyau de marche (20),
- une couche de panneau de recouvrement inférieure (24) est disposée sur le côté inférieur (14) sur le noyau de marche (20),
- les couches de panneau de recouvrement supérieure et inférieure (22, 24) sont constituées d'un matériau sans retrait ni gonflement,
- un revêtement stratifié de stratifié haute pression (High Pressure Laminate, HPL) est appliqué au moins sur la couche de panneau de recouvrement supérieure (22),
**caractérisée en ce que**
- une couche frontale de recouvrement avant (26), également nommée unité d'encollage, est disposée sur le côté frontal avant (16) sur le noyau de marche (20), qui est constituée d'un matériau sans retrait ni gonflement,
- le bord extérieur supérieur (28) de la couche frontale de recouvrement avant (26) est configuré sous la forme d'un bord arrondi postformé (28) ayant un rayon de courbure (R),
- un revêtement stratifié de stratifié haute pression (HPL) ou de stratifié à pression continue (Continuous Pressure Laminate, CPL) est appliqué du côté frontal sur la couche frontale de recouvrement avant (26).

2. Marche selon la revendication 1,
- **caractérisée en ce que**
- le noyau de marche (20) est formé à partir d'un panneau de bois plein.

3. Marche selon la revendication 1,
- **caractérisée en ce que**
- le noyau de marche (20) est configuré sous la forme d'un panneau de menuiserie.

4. Marche selon une ou plusieurs des revendications 1 à 3,
- **caractérisée en ce que**
- les couches de panneau de recouvrement supérieure et inférieure (22, 24) et la couche frontale de recouvrement avant (26) sont configurées sous la forme de panneaux de matériau à base de bois, notamment à haute densité.

5. Marche selon une ou plusieurs des revendications 1 à 3,
- **caractérisée en ce que**
- les couches de panneau de recouvrement supérieure et inférieure (22, 24) et la couche frontale de recouvrement avant (26) sont configurées sous la forme de panneaux de copeaux de bois, de panneaux HDF ou MDF.

6. Marche selon une ou plusieurs des revendications précédentes,
- **caractérisée en ce que**
- l'épaisseur (d1) de la marche (10) se situe dans la plage entre 35 à 45 mm (millimètres), notamment 38 à 42 mm (millimètres).

7. Marche selon une ou plusieurs des revendications précédentes,
- **caractérisée en ce que**
- l'épaisseur (d2) des couches de panneau de recouvrement supérieure et inférieure (22, 24) et de la couche frontale de recouvrement avant (26) se situe dans la plage entre environ 3 à 6 mm (millimètres).

8. Marche selon une ou plusieurs des revendications précédentes,
- **caractérisée en ce que**
- les couches de panneau de recouvrement supérieure et inférieure (22, 24) et la couche frontale de recouvrement avant (26) sont encollées ou collées avec le noyau de marche (20).

9. Marche selon une ou plusieurs des revendications précédentes,
- **caractérisée en ce que**
- le bord extérieur inférieur (30) de la couche frontale de recouvrement avant (26) est configuré sous la forme d'un bord postformé ayant un rayon de courbure (R).

10. Marche selon une ou plusieurs des revendications précédentes,
- **caractérisée en ce que**
- le rayon de courbure (R) du bord extérieur supérieur et/ou inférieur (28, 30) se situe dans la plage entre 2 à 10 mm (millimètres), notamment à environ 5 mm (millimètres).

11. Marche selon une ou plusieurs des revendications précédentes,
- **caractérisée en ce que**
- le revêtement stratifié (32) entoure entièrement la marche (10).

12. Marche selon une ou plusieurs des revendications précédentes,
- **caractérisée en ce que**
- le revêtement stratifié (32) présente des propriétés résistantes à l'abrasion et antidérapantes au moins sur le côté supérieur de la marche (10).

13. Marche selon une ou plusieurs des revendications précédentes,
- **caractérisée en ce que**
- le revêtement stratifié (32) comprend plusieurs couches de papier imprégnées de résine artificielle, une couche décorative et, sur le côté extérieur, une couche de laque.

14. Escalier muni de marches,
- **caractérisé en ce que**
- l'escalier comprend des marches (10) selon une ou plusieurs des revendications 1 à 13.
